# EUROPÄISCHE PATENTSCHRIFT

(11) **EP 0 811 034 B1**
(45) Veröffentlichungstag und Bekanntmachung des Hinweises auf die Patenterteilung: **28.01.2004**
(21) Anmeldenummer: 96902237.5
(22) Anmeldetag: 14.02.1996
(51) Int. Cl.: C08K 3/00, C08L 27/18, F16C 33/20

(54) **SELBSTSCHMIERENDES LAGERMATERIAL UND GLEITLAGER MIT EINEM SOLCHEN LAGERMATERIAL**
SELF-LUBRICATING BEARING MATERIAL AND FRICTION BEARING MADE OF SUCH A MATERIAL
MATERIAU AUTOLUBRIFIANT POUR PALIERS, ET PALIER A GLISSEMENT CONSTITUE DE CE MATERIAU

(30) Priorität: 25.02.1995 DE 19506684
(43) Veröffentlichungstag der Anmeldung: 10.12.1997
(73) Patentinhaber: Federal-Mogul Wiesbaden GmbH & Co.KG, 65201 Wiesbaden (DE)
(72) Erfinder: ADAM, Achim, D-64569 Nauheim (DE); GRÜNTHALER, Karl-Heinz, D-61250 Usingen (DE); HODES, Erich, D-61191 Rosbach (DE)
(74) Vertreter: Fuchs Mehler Weiss & Fritzsche
(86) Internationale Anmeldenummer: PCT/DE1996/000244
(87) Internationale Veröffentlichungsnummer: WO 1996/026975

(56) Entgegenhaltungen:
- DE-A- 3 520 068
- CHEMICAL ABSTRACTS, vol. 97, no. 24, 13.Dezember 1982 Columbus, Ohio, US; abstract no. 199684, XP002002999 & JP,A,57 102 949 (TORAY INDUSTRIES, INC.) 26.Juni 1982
- DATABASE WPI Section Ch, Week 8701 Derwent Publications Ltd., London, GB; Class A88, AN 87-002645 XP002003004 & JP,A,61 261 396 (DAIDO METAL KK) , 19.November 1986
- CHEMICAL ABSTRACTS, vol. 86, no. 20, 16.Mai 1977 Columbus, Ohio, US; abstract no. 141028, XP002003003 & JP,A,52 012 259 (TORAY INDUSTRIES, INC.) 29.Januar 1977

## Beschreibung

Die Erfindung betrifft ein selbstschmierendes Lagermaterial mit einer Kunststoffmatrix aus PTFE und mit in der Matrix eingelagerten Füllstoffen, sowie ein Gleitlager mit einer selbstschmierenden Kunststoffgleitschicht.

Lagermaterialien mit Gleitschichten auf Kunststoffbasis sind als ein-, zwei- oder dreischichtige Verbundwerkstoffe bekannt: Vollkunststofflager, Lager mit äußerem metallischem Stützkörper und direkt aufgebrachtem oder aufgeklebtem Kunststoff, solche mit internen Metallgeweben, sowie Dreischichtlager aus Stützmetall, gesinterter poröser Metallschicht und einer auf und in den Poren ausgebildeten Deckschicht. Alle diese Lager werden meist in Bereichen eingesetzt, in denen die Verwendung von Schmierstoffen nicht möglich oder unerwünscht ist. Deshalb müssen sie selbst im Betriebszustand diese Schmierstoffe zur Verfügung stellen.

Die mehrschichtigen Werkstoffe unterscheiden sich von den Vollkunststoffmaterialien z.B. durch eine vemachlässigbare Neigung zu kaltem Fluss unter Belastung, durch eine wesentlich bessere Wärmeleitfähigkeit und damit verbunden durch deutlich höhere mögliche pv-Werte. Die Vollkunststoffmaterialien können jedoch in bestimmten Fällen, z.B. aus Kostengründen, von Vorteil sein. Innerhalb der Dreischichtwerkstoffe kann man nun wieder solche mit Gleitschichten auf der Basis von Fluorthermoplasten, wie PTFE, PFA, FEP, etc. oder von anderen Kunststoffen wie PEEK unterscheiden. Die beiden letztgenannten Gruppen müssen in ihrer Funktionsweise unterschieden werden: Während die Bronzezwischenschicht bei PTFE-Basiswerkstoffen "aktiver" Bestandteil der Gleitschicht ist und ähnlich wie ein Füllstoff wirkt, nützen die anderen Kunststoffmaterialien diese nur als Verankerung. Sie lassen bei genügend hoher Affinität zum Metallrücken die Herstellung echter Zweischichtmaterialien zu, können aber auch mit Hilfe einer Klebschicht aufgebracht sein. Auf der aktiven Gleitfläche übernimmt hier der Duro- oder Thermoplast die tragende Rolle der Bronze. Weiter sind Lagermaterialien aus auf Metall geklebten gefüllten Fluorthermoplastfolien oder solche mit im Kunststoff inkorporierten Metatlgeweben bekannt, die ebenfalls auf einen Metallrücken aufgeklebt sein können.

Jede Variante hat eigene Vor- und Nachteile. Als universell einsetzbar und leicht herstellbar gelten aber die Freischicht-Werkstoffe auf der Basis der Fluorthermoplaste, wie PTFE, die auch die höchste Leistungsfähigkeit und Temperaturbeständigkeit aufweisen. Bei diesen werden über eine KunststoffDispersion homogene Mischungen erzeugt und nach der Herstellung einer PTFE/Füllstoff-Paste in einem Walzprozess und abschließendem Sintern des PTFE der endgültige Verbundwerkstoff hergestellt.

Die gebräuchlichsten verwendeten Füllstoffe für solche Werkstoffe sind Blei und Molybdändisulfid, die nahezu gleiche Leistungsfähigkeit ergeben und die auch unter Schmierung angewendet werden können. In vielen Fällen wäre die Lösung konstruktiver Problemstellungen unter Verwendung von wartungsfreien platzsparenden Gleitlagern mit PTFE-Gleitschicht wünschenswert, sie muss jedoch aufgrund deren oberer Belastungsgrenze verworfen werden, die im mittleren Last- und Geschwindigkeitsbereich (0,5 - 100 MPa und 0,02 -2 m/s) bei einem pv-Wert von ca. 2 MPa m/s liegt.

Aus der JP 57102949 ist ein Gleit- oder Lagermaterial bekannt, das ein Polyamidimid oder eine Mischung aus Polyamidimid und Polyimid aufweist,
wobei das Polyamidimid eine spezielle Struktur aufweisen muss. Dieses Lagermaterial kann Zusätze enthalten, wie z.B. PTFE und Blei.

Aus der DE 41 05 657 ist ein Gleitmaterial bekannt, das ein Stützmetall mit einer porösen Metallschicht aufweist, in der definierte Poren vorliegen,
wobei die Poren und ihre Oberflächen mit einer Imprägnierbeschichtungsmasse imprägniert und beschichtet sind. Die Imprägnierbeschichtungsmasse besteht aus 0,5 - 30 Vol.-% PFA, EPE oder FEP, 5 - 30 Vol.-% Bleimetall mit einer spezifischen Oberfläche von 1000 - 8500 cm²/g in einer mittleren Teilchengröße, 0,5 - 30 Vol.-% Metalloxid, Metallfluorid, Graphit oder dergleichen, Keramiken, wie SiC, Fasermaterial, wie Kohlenstoff-Fasern oder Glasfasern und zum Rest aus PTFE. Die Gesamtmenge aller Komponenten außer PTFE beträgt 6 - 50 Vol.-%.

In der DE 41 05 657 A1 wird lediglich ein metallfluoridhaltiges Imprägniermaterial genannt, das 2% PbF₂, jedoch kein Metalloxid, aufweist, wobei dieses sich gegenüber den anderen, kein Metallfluorid aufweisenden Ausführungsbeispielen nicht durch verbesserte Kavitationsfestigkeit und VerschleiBbestäaldigkeit auszeichnet.

In der EP 0 183 375 A2 wird ein Lager insbesondere für Stoßdämpfer beschrieben, dessen Gleitschicht zur Verbesserung der Kavitationsbeständigkeit aus PTFE mit einem Fluorid geringer Wasserlöslichkeit besteht. Der Anteil der Fluoride, die u.a. CaF₂ oder MgF₂ sein können, soll bei 1 - 50 Vol.-%, vorzugsweise bei 10 - 30 Vol.-% liegen. Als bevorzugtes Beispiel werden 20 Vol.-% CaF₂ genannt.

In der GB 912,793 werden Standard-Lagermaterialien aus PTFE mit Blei und/oder Bleioxid beschrieben, wobei der Füllstoffanteil bei 16 - 44%, vorzugsweise bei 16 - 30% liegt.

Das aus der DE 35 16 649 A1 bekannte selbstschmierende Lager weist in der PTFE-Matrix dünn ausgewalzte blatt- oder schuppenförmige Teilchen auf, die Schlieren bilden, welche aus einer Vielzahl von im Abstand übereinander angeordneten Schichten bestehen, die sich im wesentlichen parallel zur Oberfläche der Sintermetailschicht erstrecken. Als Festschmierstoff werden u.a. Metalloxide und Metallfluoride genannt, wobei als Beispiel lediglich Blei bzw. Bleioxid diskutiert wird.

Aufgabe der Erfindung ist es, ein selbstschmierendes Lagermaterial sowie ein Gleitlager mit einem solchen selbstschmierenden Lagermaterial bereitzustellen, dessen Leistungsfähigkeit unter schmierungsfreien Bedingungen so deutlich verbessert ist, dass pv-Werte im mittleren Last- und Geschwindigkeitsbereich von bis zu 6 MPa m/s erreicht werden.

Diese Aufgabe wird mit einem selbstschmierenden Lagermaterial gemäß dem Patentanspruch 1 gelöst. Gegenstand des Gleitlagers ist der Patentanspruch 11. Vorteilhafte Ausgestaltungen sind Gegenstand der Unteransprüche.

Die Erfindung geht von der Erkenntnis aus, dass die Leistungsfähigkeit unter schmierungsfreien Bedingungen dann deutlich gesteigert werden kann, wenn eine bestimmte Füllstoffkombination in Verbindung mit PTFE eingesetzt wird, die PbO und Metallfluorid aufweist. Hierbei ist es wichtig, dass ein eng begrenzter Bereich dieser Füllstoffkombination aus PbO und Metallfluorid eingehalten wird.

Es hat sich überraschend herausgestellt, dass für PTFE aufweisende Materialien bei den Metallfluoriden ein Bereich von 0,1 - 14 Vol.-% besonders ausgezeichnet ist, was bisher aus dem Stand der Technik so nicht bekannt war. Wenn in der EP 0 183 375 ein Metallfluoridanteil von 1 - 50% genannt und ein relativ hoher Anteil von 20% als besonders vorteilhaft beschrieben wird, so ist dies offensichtlich darauf zurückzuführen, dass in dem bekannten Gleitmaterial überhaupt kein PbO vorhanden ist, so dass das Fehlen dieses Füllstoffes durch einen hohen Metalifluoridanteil ausgeglichen werden muss. Die Tatsache, dass ein Metallfluoridanteil von 0,1 -14 Vol.-% zu besonders vorteilhaften Eigenschaften führt, liegt vermutlich an der Wechselwirkung mit Bleioxid, das im Bereich von 15 - 55 Vol.-% gleichzeitig in dem Gleitmaterial enthalten sein muss. Oberhalb des Bereichs von 14 Vol.-% kann durch den Metallfluoridanteil zum PbO keine Verbesserung mehr erzielt werden.

Die mit der Füllstoffkombination erzielten verbesserten Eigenschaften des Gleitmaterials bleiben erhalten bzw. konnten für bestimmte Anwendungen noch durch weitere Zusätze verbessert werden, wenn der Anteil dieser weiteren Zusätze maximal bis zu 40 Vol.-% vorzugsweise bis zu 20 Vol.-% der PbO-Metallfluorid-Füllstoffkombination beträgt. Als weitere Zusätze können solche aus einer oder mehreren der Gruppen der Hartstoffe, Pigmente, Fasermaterialien, Festschmierstoffe oder Duro- oder Hochtemperaturthermoplaste eingesetzt werden. Als Hartstoffe eignen sich insbesondere Si₃N₄ und als Pigmente Fe₂O₃ oder Russ. Als Fasermaterialien kommen insbesondere Graphitkurzfasern oder Aramidfasern in Frage. Bevorzugte Festschmierstoffe sind MoS₂ und Bomitrid. Als Duroplaste oder hochtemperaturbeständige Thermoplaste können Polyamidimide oder Polyimide eingesetzt werden.

In PTFE-Matrix-Werkstoffen hat sich der Metallfluoridanteil von 0,1 -14 Vol.-% insbesondere bei Calciumfluorid als besonders vorteilhaft herausgestellt. Aber auch mit PbF₂, MgF₂ oder einer anderen Fluorverbindung eines Elementes der zweiten Hauptgruppe des Periodensystems konnten in diesem Bereich deutliche Verbesserungen des Lagermaterials erzielt werden.

Innerhalb des erfindungsgemäßen Bereichs von 0,1 -14 Vol.-% CaF₂ und 15 - 55 Vol.-% PbO ist der Bereich 20 - 40 Vol.-% PbO und 0,3 - 8 Vol.-% CaF₂ besonders vorteilhaft.

Ein Gleitlager mit einer solchen Gleitschicht kann als Vollkunststofflager oder mit einem Metallrücken ausgeführt sein. Die Gleitschicht kann direkt auf einen Metallrücken aufgebracht sein oder es kann auf dem Metallrücken eine Schicht aus poröser Sinterbronze vorgesehen sein, auf der dann die Gleitschicht aufgebracht ist.

Die Dreischichtwerkstoffe können beispielsweise derart aufgebaut sein, dass auf dem Stützmetall wie z.B. Stahl oder einer Kupfer- oder Aluminiumlegierung eine 0,15 - 0,5 mm dicke Schicht Bronze so aufgesintert wird, dass sie ein Porenvolumen von 20 - 45% aufweist und die Zusammensetzung der Bronze 5 - 15% Zinn und wahlweise zusätzlich 5 -15% Blei enthält. Die Kunststoffmischung wird dann durch Einwalzen so auf den porösen Untergrund aufgebracht, dass die Poren vollständig ausgefüllt sind und, je nach Anwendungsfall eine 0 - 50 µm Deckschicht entsteht Danach wird das Material in einem Ofen einer Wärmebehandlung unterzogen, bei der das enthaltende PTFE 3 min bei 380°C gesintert wird, um in einem abschließenden Walzschritt den endgültigen Verbund und das erforderliche Endmaß herzustellen.

Die Herstellung der Kunststoffmischung kann über eine PTFE-Dispersion erfolgen, die den Füllstoffen so beigemischt wird, dass sie der nachfolgend herbeigeführten Koagulation in homogener Verteilung mitgerissen werden. Hierbei entsteht eine pastöse Masse, die die für den nachfolgenden Beschichtungsprozess erforderlichen Eigenschaften aufweist.

Beispielhafte Ausführungsformen werden nachfolgend anhand der Zeichnungen und der Tabellen erläutert.

Es zeigen:

| | |
|---|---|
| Figur 1 | ein Diagramm, in dem die Lebensdauer in Abhängigkeit vomCaF₂-Anteil graphisch dargestellt ist und |
| Figure 2 bis 4 | Diagramme, in denen die Verschteißrate für unterschiedliche Zusammensetzungen graphisch dargestellt ist. |

### Beispiel 1:

9 I Wasser, 20 g Natriumlaurylsulfat, 13,4 kg PbO, 0,85 kg CaF₂ und 21,6 kg einer 40-%igen PTFE-Dispersion werden 20 min kräftig gerührt. Dann werden 500 g einer 20%-igen Aluminiumnitrat-Lösung zugegeben. Nach erfolgter Koagulation wird die für die Verarbeitung erforderliche Konsistenz dadurch erzeugt, dass 1 I Toluol 10 min in das Gemisch eingerührt wird.

**Tab. 1**

| Bsp.Nr. | Zusammenssetzung, Vol% | Verschleiß [µm/h] | Reibwert |
|---|---|---|---|
| 0 | 80 PTFE, 20 Pb (Vgl.- Material, St.d.T) | 120 | 0,20 |
| 1 | 70 PTFE, 25,5 PhO, 4,5 CaF₂ | 29 | 0,17 |
| 2 | 70 PTFE, 30 PbO | 40 | 0,17 |
| 3 | 65 PTFE, 26,2 PbO, 8,8 CaF₂ | 26 | 0,16 |
| 4 | 65 PTFE, 35 PbO | 38 | 0,15 |
| 5 | 60 PTFE, 35 PbO, 5 CaF₂, | 20 | 0,15 |
| 6 | 60 PTFE, 40 PbO | 35 | 0,17 |

**Tab. 2**

| Bsp.Nr. | Zusammensetzung, Vol.% | Verschleiß [µm/h] | Reibwert |
|---|---|---|---|
| 5(z.Vgl.) | 60 PTFE, 35 PbO, 5 CaF₂ | 20 | 0,15 |
| 7 | 60 PTFE, 31,5 PbO,4,5 CaF₂, 4 Si₂N₄ | 15 | 0,17 |
| 8 | 60 PTFE, 29,8 PbO, 4,2 CaF₂, 6 C-Faser | 13 | 0,18 |
| 9 | 60 PTFE, 33,3 PbO, 4,7 CaF₂ 2 F₂O₃ | 18 | 0,15 |
| 10 | 60 PTFE, 30,8 PbO, 4,4 CaF₂, 4,8 MoS₂ | 8 | 0,16 |
| 11 | 60 PTFE, 32,2 PbO, 4,6 CaF₂, 3,2 PAI | 26 | 0,20 |

**Tab. 3**

| Bsp.Nr. | Zusammensetzung, Vol.% | Verschleiß [µm/h] | Reibwert |
|---|---|---|---|
| 3(z.Vgl.) | 65 PTFE, 26,2 PbO, 8,8 CaF₂ | 26 | 0,16 |
| 12 | 65 PTFE, 26,2 PbO, 8,8 MgF₂ | 30 | 0,17 |
| 13 | 65 PTFE, 26,2 PbO, 8,8 PbF₂ | 28 | 0,15 |

Es hat sich gezeigt, daß die erfindungsgemäßen Zusammensetzungen den Standardwerkstoffen auf der Basis PTFE/MoS₂ oder PTFE/Pb sowohl bezüglich des Reibwertes als auch der Verschleißfestigkeit deutlich überlegen sind und auch die gegenüber diesen Gleitmaterialien verbesserten Zusammensetzungen aus PTFE und PbO übertreffen.

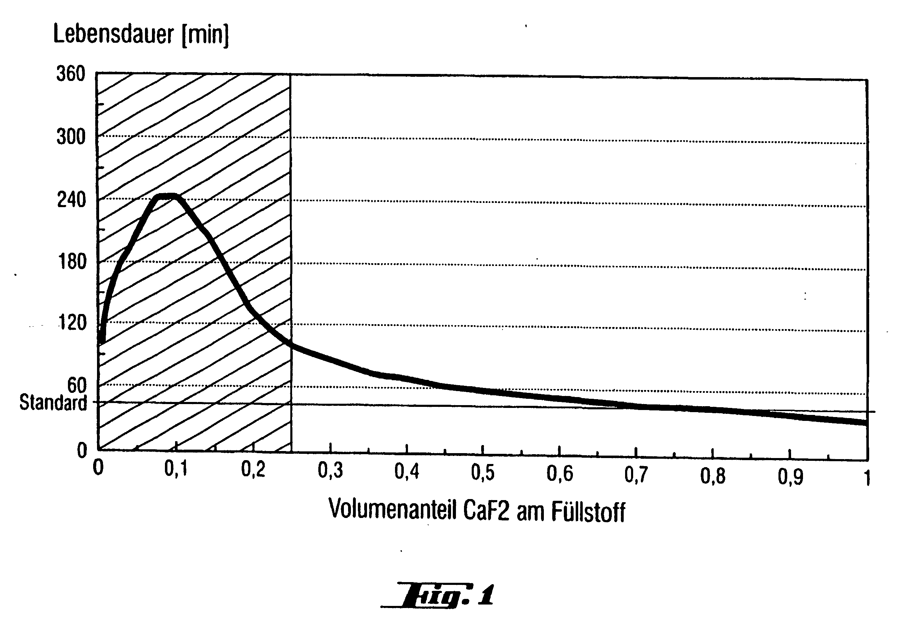

Die Zusammensetzung aus PTFE, PbO und CaF₂ wurden über einen großen Bereich variiert und Proben der beschriebenen Dreischichtmaterialien aus 1,25 mm Stahl, 0,23 mm Bronze und 0,02 mm Kunststoffdeckschicht hergestellt. An diesen Proben wurden mittels eines Stift/Walzen-Tribometers mit Prüflingen von 0,78 cm² die Verschleißraten bei einer Umfangsgeschwindigkeit von 0,52 m/sec und einer Belastung von 17,5 MPa gemessen und mit einem Standardmaterial verglichen. Als Standardmaterial wurde ein Verbundmaterial mit einer Kunststoffschicht aus 80 Vol.-% PTFE und 20 Vol.-% Blei herangezogen, das als Beispiel Nr. O in der Tabelle 1 genannt ist und in den Fig. 1, 2 und 4 als Standard bzw. Material nach dem Stand der Technik bezeichnet wird.

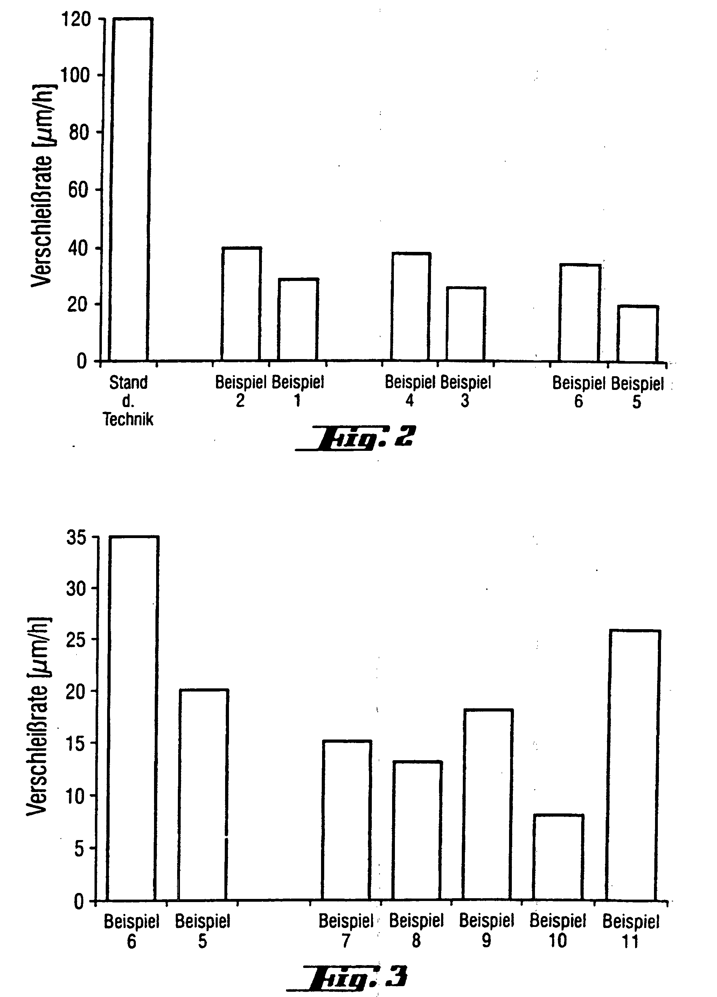

In der Figur 1 ist die Lebensdauer eines erfindungsgemäßen Gleitlagers in Abhängigkeit von CaF₂-Gehalt am Füllstoff dargestellt, wobei der Gesamtfüllstoff konstant bei 40 Vol.-% gehalten wurde. Es ist deutlich zu sehen, daß im schraffierten Bereich ein deutlich ausgeprägtes Maximum bezüglich der Lebensdauer vorliegt, was einem Verschleißminimum entspricht. Im Maximum sind die erreichten Lebensdauerwerte etwa dreimal so groß wie diejenigen, die mit einem Lagermaterial erreicht werden, das lediglich Bleioxid in der Kunststoffmatrix aufweist. Zur Verdeutlichung der erfindungsgemäß erzielbaren Verbesserungen wurden die in Tabelle 1 zusammen mit den Reibwerten und Verschleißraten aus der Stift/Walze-Prüfung aufgeführten Materialzusammensetzungen geprüft. In der Abb. 2 sind die Ergebisse graphisch gegenübergestellt. Es ist deutlich zu sehen, daß die Gleitmaterialien mit der Füllstoffkombination PbO/CaF₂ in allen Fällen besser abschneidet als ein Gleitmaterial, das lediglich PbO aufweist.

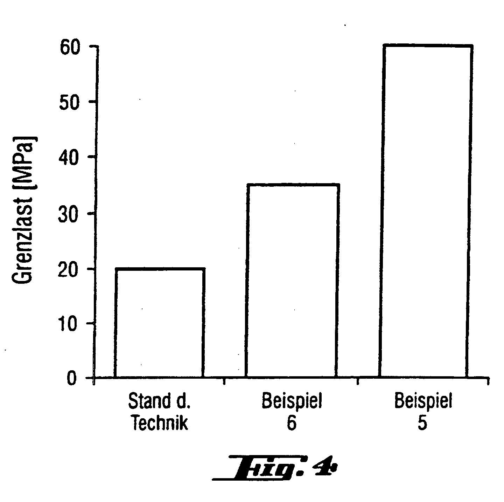

Aus den in der Tabelle 2 und der Figur 3 gegenübergestellten Ergebnissen der Beispiele 7 bis 11 geht hervor, daß die erfindungsgemäßen Gleitmaterialien auch mit weiteren Zusätzen kombiniert werden können, ohne die positiven Eigenschaften zu verlieren. Teilweise werden durch diese Zusätze sogar noch deutliche Verbesserungen erreicht.

In den Beispielen 12 und 13 wurden anstelle von Calciumfluorid Magnesiumfluorid und Bleifluorid verwendet. Die entsprechenden Ergebnisse im Vergleich zu einer Zusammensetzung, die Calciumfluorid aufweist, sind in der Tabelle 3 zusammengefaßt. Es wird deutlich, daß zur Herbeiführung des erfindungsgemäßen Effektes auch andere Fluorverbindungen mit Metallen der zweiten Hauptgruppe des Periodensystems oder Bleifluorid geeignet sind.

Von den Zusammensetzungen gemäß den Beispielen 5 und 6 wurden Buchsen mit einem Durchmesser von 22 mm hergestellt, die im rotierenden Prüflauf auf ihre Grenzbelastbarkeit überprüft wurden. Als Grenzlast wurde die höchstmögliche Last definiert, bei der unter einer Geschwindigkeit von 0,125 m/sec eine Laufstrecke von 22,5 km erreicht wurde. Das Ausfallkriterium war ein starker Anstieg von Reibwert und Temperatur, was sich bei einer nachfolgenden Untersuchung als gleichbedeutend mit einer mittleren Verschleißtiefe von 90 µm erwies. Das Ergebnis des Beispiels 5 entspricht bei anderer Auswertung einem pv-Wert von 6 MPa . m/sec. Die entsprechenden Ergebnisse sind in der Figur 4 graphisch dargestellt.

Eine weitere Möglichkeit, die Erfindung vorteilhaft auszuführen, besteht darin, die erfindungsgemäßen Mischungen inclusive PTFE in eine thermoplastische Matrix einzuarbeiten und diese dann auf beliebige Weise zu einem Gleitelement zu verarbeiten, z. B. auf einen Metallrücken mit oder ohne Bronzezwischenschicht aufzubringen oder Vollkunststoffteile herzustellen. Dabei kann der Thermoplastanteil von 60 - 95 Vol.-% variiert werden. Die Beispiele 2 bis 13 wurden auf die gleiche Weise hergestellt.

## Patentansprüche

1. Selbstschmierendes Lagermaterial mit einer Kunststoffmatrix aus PTFE und mit in der Matrix enthaltenen Füllstoffen,
**dadurch gekennzeichnet,**
**daß** das Lagermaterial, jeweils bezogen auf das gesamte Lagermaterial, aus 15-55 Vol.-% PbO und 0,1-14 Vol.-% Metallfluorid und der Rest aus PTFE besteht,
wobei bis zu 40 Vol.-% der Gesamtmenge der PbO/Metallfluorid-Füllstoffe durch einen oder mehrere der Gruppen der Hartstoffe, Pigmente, Fasermaterialien, Festschmierstoffe oder der Duro- oder Hochtemperaturthermoplaste ersetzt sind.

2. Lagermaterial nach Anspruch 1, **dadurch gekennzeichnet, daß** das Metallfluorid CaF₂, PbF₂, MgF₂ oder eine Fluorverbindung eines Elementes der 2. Hauptgruppe des Periodensystemes ist.

3. Lagermaterial nach Anspruch 1 oder 2, **dadurch gekennzeichnet, daß** das Lagermaterial, jeweils bezogen auf das gesamte Lagermaterial, aus 15-55 Vol.-% PbO, 0,1-14 Vol.-% CaF₂ und der Rest aus PTFE besteht.

4. Lagermaterial nach Anspruch 3, **dadurch gekennzeichnet, daß** das Lagermaterial, jeweils bezogen auf das gesamte Lagermaterial, aus 20-40 Vol.-% PbO, 0,3-8 Vol.-% CaF₂ und der Rest aus PTFE besteht.

5. Lagermaterial nach einem der Ansprüche 1 bis 4, **dadurch gekennzeichnet, daß** bis zu 20 Vol.-% der Gesamtmenge der PbO/Metallfluorid-Füllstoffe durch einen oder mehrere der Gruppe der Hartstoffe, Pigmente, Fasermaterialien, Festschmierstoffe oder der Durooder Hochtemperaturthermoplaste ersetzt ist.

6. Lagermaterial nach einem der Ansprüche 1 bis 5, **dadurch gekennzeichnet, daß** die Hartstoffe Si₃N₄ sind.

7. Lagermaterial nach einem der Ansprüche 1 bis 6, **dadurch gekennzeichnet, daß** die Pigmente Fe₂O₃ oder Ruß sind.

8. Lagermaterial nach einem der Ansprüche 1 bis 7, **dadurch gekennzeichnet, daß** das Fasermaterial Graphitkurzfasern oder Aramidfasern sind.

9. Lagermaterial nach einem der Ansprüche 1 bis 8, **dadurch gekennzeichnet, daß** die Festschmierstoffe MoS₂ oder Bornitrid sind.

10. Lagermaterial nach einem der Ansprüche 1 bis 9, **dadurch gekennzeichnet, daß** die Duro- oder Hochtemperaturthermoplaste Polyamidimide oder Polyimide sind.

11. Gleitlager mit einer selbstschmierenden Kunststoffgleitschicht, **dadurch gekennzeichnet, daß** die Kunststoffgleitschicht, jeweils bezogen auf die gesamte Kunststoffgleitschicht, aus 15-55 Vol.-% PbO und 0,1-14 Vol.-% Metallfluorid und der Rest aus PTFE besteht,
wobei bis zu 40 Vol.-% der Gesamtmenge der PbO/Metallfluorid-Füllstoffe durch einen oder mehrere der Gruppen der Hartstoffe, Pigmente, Fasermaterialien, Festschmierstoffe oder der Duro- oder Hochtemperaturthermoplaste ersetzt sind.

12. Gleitlager nach Anspruch 11, **dadurch gekennzeichnet, daß** die Gleitschicht direkt auf einem Metallrücken aufgebracht ist.

13. Gleitlager nach Anspruch 12 **dadurch gekennzeichnet, daß** die Gleitschicht auf einem mit einer Schicht aus poröser Sinterbronze versehenen Metallrücken aufgebracht ist.

14. Gleitlager nach Anspruch 13 **dadurch gekennzeichnet, daß** die Sinterbronze ein Porenvolumen von 20-45 % aufweist.

15. Gleitlager nach einem der Ansprüche 13 oder 14, **dadurch gekennzeichnet, daß** Sinterbronze 5-15 % Zinn aufweist.

16. Gleitlager nach einem der Ansprüche 13 bis 15, **dadurch gekennzeichnet, daß** die Sinterbronze 5-15 % Zinn und 5-15 % Blei aufweist.

17. Gleitlager nach Anspuch 11, **dadurch gekennzeichnet, daß** es aus Massivkunstoffgleitelementen besteht.

## Claims

1. A self-lubricating bearing material with a synthetic resin matrix of PTFE and fillers contained in the matrix
**characterised in that**
the bearing material consists of 15 - 55 % by vol. PbO and 0.1 - 14 % by vol. metal fluoride, each based on the bearing material as a whole, the remainder being PTFE,
up to 40 % by vol. of the total amount of PbO/metal fluoride fillers being replaced by one or several from the group of rigid materials, pigments, fibre materials, solid lubricants or thermosetting plastic or high temperature thermoplastics.

2. The bearing material according to claim 1,
**characterised in that** the metal fluoride is CaF₂, PbF₂, MgF₂ or a fluorine compound of an element of the second main group of the periodic system.

3. The bearing material according to claim 1 or 2, **characterised in that** the bearing material consists of 15 - 55 % by vol. PbO and 0.1 - 14 % by vol. CaF₂, each based on the bearing material as a whole, the remainder being PTFE.

4. The bearing material according to claim 3,
**characterised in that** the bearing material consists of 20 - 40 % by vol. PbO and 0.3 - 8 % by vol. CaF₂, each based on the bearing material as a whole, the remainder being PTFE.

5. The bearing material according to one of claims 1 to 4, **characterised in that** up to 20 % by vol. of the total amount of PbO/metal fluoride fillers is replaced by one or several from the group of rigid materials, pigments, fibre materials, solid lubricants or thermosetting plastic or high temperature thermoplasts.

6. The bearing material according to one of claims 1 to 5, **characterised in that** the rigid materials are Si₃N₄.

7. The bearing material according to one of claim 1 to 6, **characterised in that** the pigments are Fe₂O₃ or carbon black.

8. The bearing material according to one of claims 1 to 7, **characterised in that** the fibre material consists of chopped graphite fibres or aramid fibres.

9. The bearing material according to one of claims 1 to 8, **characterised in that** the solid lubricants is MoS₂ or boron nitride.

10. The bearing material according to one of claims 1 to 9, **characterised in that** the thermosetting plastic or high temperature thermoplastics are polyamide imides or polyimides.

11. A friction bearing with a self-lubricating polymer sliding layer **characterised in that** the polymer sliding layer consists of 15 - 55 % by vol. PbO and 0.1 - 14 % by vol. metal fluoride, each based on the polymer sliding layer as a whole, the remainder being PTFE,
wherein up to 40 % by vol. of the total amount of PbO/metal fluoride fillers being replaced by one or several from the group of the rigid materials, pigments, fibre materials, solid lubricants or thermosetting plastic or high temperature thermoplastics.

12. The friction bearing according to claim 11,
**characterised in that** the sliding layer is applied directly on to a metal back.

13. The friction bearing according to claim 12,
**characterised in that** the sliding layer is applied on to a metal back provided with a layer of porous sintered bronze.

14. The friction bearing according to claim 13,
**characterised in that** the sintered bronze has a pore volume of 20 - 45 %.

15. The friction bearing according to one of claims 13 or 14, **characterised in that** the sintered bronze exhibits 5 - 15 % tin.

16. The friction bearing according to one of claims 13 to 15, **characterised in that** the sintered bronze exhibits 5 - 15 % tin and 5 - 15 % lead.

17. The friction bearing according to claim 11,
**characterised in that** it consists of solid polymer sliding layer elements.

## Revendications

1. Matériau autolubrifiant pour paliers avec une matrice plastique en PTFE et avec des matières de remplissage contenues dans la matrice,
**caractérisé en ce**
**que** le matériau pour paliers, respectivement rapporté à l'ensemble du matériau pour paliers, est composé de 15 - 55 % volumétriques de PbO et 0,1 - 14 % volumétriques de fluorure de métal et le reste de PTFE,
jusqu'à 40 % volumétriques de la quantité totale des matières de remplissage de PbO/fluorure de métal étant remplacés par un ou plusieurs des groupes de substances dures, pigments, matériaux fibreux, lubrifiants solides ou résines thermodurcissables ou thermoplastiques à haute température.

2. Matériau pour paliers selon la revendication 1, **caractérisé en ce que** le fluorure de métal est du CaF₂, PbF₂, MgF₂ ou un composé fluoré d'un élément du 2^{ème} groupe principal de la classification périodique des éléments.

3. Matériau pour paliers selon la revendication 1 ou 2, **caractérisé en ce que** le matériau pour paliers, respectivement rapporté à l'ensemble du matériau pour paliers, est composé de 15 - 55 % volumétriques de PbO, 0,1 - 14 % volumétriques de CaF₂ et le reste de PTFE.

4. Matériau pour paliers selon la revendication 3, **caractérisé en ce que** le matériau pour paliers, respectivement rapporté à l'ensemble du matériau pour paliers, est composé de 20 - 40 % volumétriques de PbO, 0,3 - 8 % volumétriques de CaF₂ et le reste de PTFE.

5. Matériau pour paliers selon l'une des revendications 1 à 4, **caractérisé en ce que** jusqu'à 20 % volumétriques de la quantité totale de matières de remplissage de PbO/fluorure de métal sont remplacés par un ou plusieurs des groupes de substances dures, pigments, matériaux fibreux, lubrifiants solides ou résines thermodurcissables ou thermoplastiques à haute température.

6. Matériau pour paliers selon l'une des revendications 1 à 5, **caractérisé en ce que** les substances dures sont du Si₃N₄.

7. Matériau pour paliers selon l'une des revendications 1 à 6, **caractérisé en ce que** les pigments sont du Fe₂O₃ ou de la suie.

8. Matériau pour paliers selon l'une des revendications 1 à 7, **caractérisé en ce que** les matériaux fibreux sont des fibres courtes de graphite ou des fibres d'aramide.

9. Matériau pour paliers selon l'une des revendications 1 à 8, **caractérisé en ce que** les lubrifiants solides sont du MoS₂ ou du nitrure de bore.

10. Matériau pour paliers selon l'une des revendications 1 à 9, **caractérisé en ce que** les résines thermodurcissables ou thermoplastiques à haute température sont du polyamideimide ou du polyimide.

11. Palier à glissement avec une couche de glissement plastique autolubrifiante, **caractérisé en ce que** la couche de glissement plastique, respectivement rapportée à l'ensemble de la couche de glissement plastique, est composée de 15 - 55 % volumétriques de PbO et de 0,1 - 14 % volumétriques de fluorure de métal et le reste de PTFE,
jusqu'à 40 % volumétriques de la quantité totale des matières de remplissage de PbO/fluorure de métal étant remplacés par un ou plusieurs des groupes de substances dures, pigments, matériaux fibreux, lubrifiants solides ou résines thermodurcissables ou thermoplastiques à haute température.

12. Palier à glissement selon la revendication 11, **caractérisé en ce que** la couche de glissement est appliquée directement au dos d'un métal.

13. Palier à glissement selon la revendication 12, **caractérisé en ce que** la couche de glissement est appliquée directement au dos d'un métal doté d'une couche de bronze fritté poreux.

14. Palier à glissement selon la revendication 13, **caractérisé en ce que** le bronze fritté présente un volume poreux de 20 - 45 %.

15. Palier à glissement selon l'une des revendications 13 ou 14, **caractérisé en ce que** le bronze fritté présente 5 - 15 % d'étain.

16. Palier à glissement selon l'une des revendications 13 à 15, **caractérisé en ce que** le bronze fritté présente 5 - 15 % d'étain et 5 - 15 % de plomb.

17. Palier à glissement selon la revendication 11, **caractérisé en ce qu'**il est composé d'éléments de glissement en plastique massif.
